# EUROPEAN PATENT SPECIFICATION

(11) **EP 3 228 488 B1**
(45) Date of publication and mention of the grant of the patent: **06.02.2019**
(21) Application number: 17165465.0
(22) Date of filing: 07.04.2017
(51) Int. Cl.: B60H 1/00, F25B 45/00

(54) **REFRIGERANT REMOVAL DEVICE AND METHOD**
KÄLTEMITTELENTFERNUNGSVORRICHTUNG UND -VERFAHREN
DISPOSITIF ET PROCÉDÉ DE RETRAIT DE RÉFRIGÉRANT

(30) Priority: 07.04.2016 IT UA20162396
(43) Date of publication of application: 11.10.2017
(73) Proprietor: Mahle Aftermarket Italy S.p.A., 43126 Parma (IT)
(72) Inventor: CANTADORI, Andrea, 43126 Parma (IT)
(74) Representative: Dondi, Silvia

(56) References cited:
- US-A- 4 539 817
- US-A- 6 158 234
- US-A1- 2014 182 684

## Description

### SCOPE OF THE INVENTION

The present invention relates to the field of coolant recovery apparatuses in air conditioning systems of a vehicle.

### PRIOR ART

In order to protect the environment by reducing the greenhouse effect, the law relating to air conditioning systems in vehicles (European Directive 2006/40/EC) requires the use of coolants only with GWP (Global Warming Potential) index of at most 150.

The R134a gas commonly used today has a GWP index of 1430, thus a high potential of impact on the greenhouse effect, therefore the use of a new coolant called R1234yf, which has a GWP of 4, is spreading.

In particular, said R1234yf has been used on newly registered vehicles since 2011 and from 2017 onwards, it will not be possible anymore to introduce into the market vehicles with systems using the R134a gas.

However it is estimated that, by that date, about 60% of the European circulating vehicles will still be equipped with R134a gas; therefore, there will be the need to change said gas by replacing it with the approved one.

In addition, it should also be mentioned that there is a relevant portion of the circulating vehicles that still uses gas having unknown or otherwise unsuitable composition, such as propane, which incidentally is highly flammable.

Therefore, there is the need to develop a methodology for addressing the problem of how to proceed with the maintenance of the air conditioning system of motor vehicles, and in particular with charging the coolant, if:
- the coolant is not of the approved type, but the coolant used before the regulations on the use of R1234yf,
- the coolant is of unknown type.

Identifying systems are known which are configured to analyze and identify whether the type of coolant present in the vehicle air conditioning system is known or unknown, or in general "contaminated".

If there is a mixture of coolants or of substances which are unknown or difficult to identify, the operating protocol provides to carry out the extraction of the "contaminated" coolant without the aid of the so-called "air conditioning service units" which normally used in workshops because they are coolant recovery and charging machines and which consist of a recovery unit, a hydraulic suction/introduction circuit and an electrical system.

These components would make the extraction highly dangerous, or at least not safe to the operator.

The need is therefore felt to extract safely the "contaminated" coolant from the vehicle air conditioning system and only after that to reintroduce the approved coolant, currently R1234yf.

A method currently employed provides for connecting the air conditioning system of the car to an external auxiliary container, such as a tank, in turn immersed in a fluid at low temperature, such as dry ice (solid state carbon dioxide obtained when the temperature reaches -78 °C).

At that point, the gas present within the vehicle air conditioning system moves into the auxiliary tank and condensates.

However, the applicant finds many drawbacks in the use of the coolant gas extraction system and method in vehicle air conditioning systems by means of dry ice for condensation.

A first drawback is to find of the material, its transport and especially storage; this would require the use of refrigerating rooms and a suitable and dedicated equipment, hardly available in workshops.

A second drawback is that of the very strict implementation of usage measures, requiring the need for gloves and suitable protection for working with dry ice.

Last but not least, a third drawback is related to the inhalation of CO₂, which in high concentrations produces toxic effects and may cause permanent damage. In fact the regulations require levels of security designed to keep the dry ice to below 1%, in order to have light effects on metabolism even after an exposure of several hours.

For specific uses, it is calculated that at least 300 m³ air would be needed to dispose of the amount of dry ice needed to cool the tank containing the "contaminated" coolant.
Document US 2014/0182684 discloses a refrigerant removal method according to the preamble of claim 1 and a refrigerant removal system according to the preamble of claim 6.

### DECRIPTION AND ADVANTAGES OF THE INVENTION

An object of the present invention is to provide an improved method for recovering only the unsuitable and/or "contaminated" coolant present in a cooling circuit of air conditioning systems of vehicles, with a safe, cost-effective solution that does not contemplate the use of dry ice.

In addition, the methodology requires little maintenance and it is easily implementable by workshop operators, without requiring a higher degree of specialization.

These and other objects are achieved by the features of the invention as described in the independent claims. The dependent claims describe preferred and/or particularly advantageous aspects of the invention.
In particular, an embodiment of the present invention provides a method according to claim 1.

More specifically, by suitably connecting the above machine available in the workshop for the indicated operations, i.e. by connecting it to said containment means so as to form a closed circuit, in particular a refrigerating closed circuit, it is extracted the heat required to cool said containment means and thus the coolant to be extracted or recovered.

Owing to this solution, it is extremely convenient and easy to implement the connection and the use of the coolant contained in the existing coolant fluid recovery/charging machine; in fact, few connections and easy configuration are required to establish an external refrigerating circuit that requires no electrical connections directly associated with the vehicle air conditioning system, preserving the operators' safety during this extraction.

According to the invention, the method provides that the refrigerating circuit may be excluded while keeping the existing machine connected; in this way, opening a bypass passage (and closing at the same time a lamination valve configured to produce the evaporation of the coolant fluid) it is possible to heat the container, thanks to the fluid that now passes within, and almost at room temperature, a heat exchanger placed for example in the containment means of the gas to be extracted or recovered.

With this solution, the pressure rises and facilitates the transfer of the extracted coolant towards the outlet and thus the collection of the extracted coolant to be then disposed of from a further container, preferably placed underneath so as to facilitate the discharge by gravity.

Another object of the invention is a system according to claim 6.

Said objects and advantages are all achieved by the method and system for recovering coolant gas from an air conditioning system by an external containment means, object of the present invention, which is characterized by the appended claims.

### BRIEF DESCRIPTION OF THE FIGURES

This and other features will become more apparent from the following description of some of the configurations, illustrated purely by way of example in the accompanying drawing.

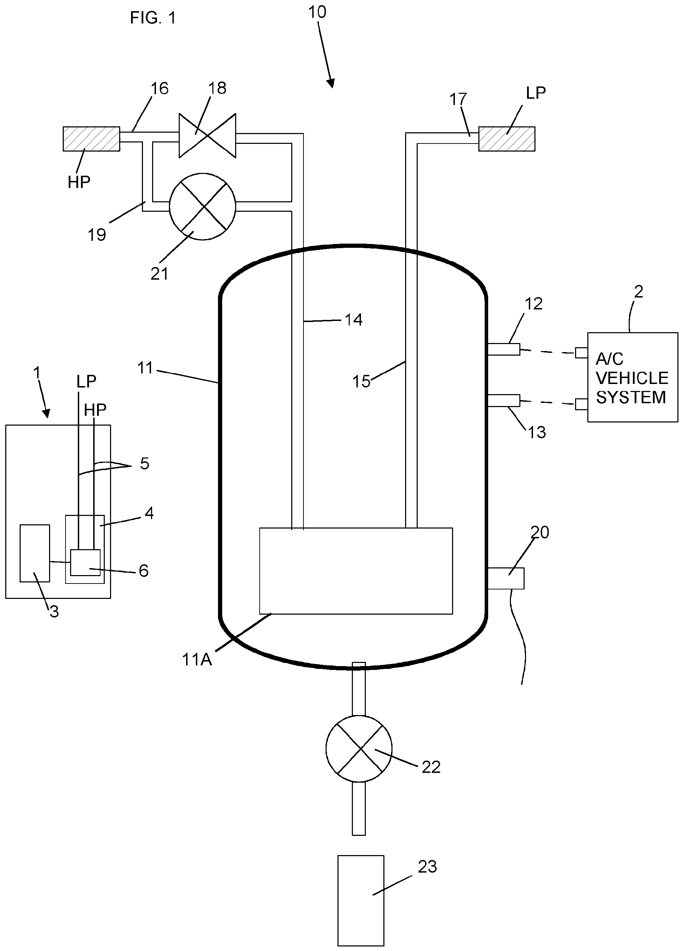

- Figure 1: schematically shows the system and device for extracting contaminated gases from an air conditioning system of vehicles, according to the invention.

### DESCRIPTION OF THE INVENTION

Normally, the technical term of "climate stations" or "charging station" refers to machines for charging/recovering a coolant fluid in/from an air conditioning system of a vehicle.

With reference numeral 1 it is indicated a generic charging station of an air conditioning system 2, such as a car, a truck, a bus or any other similar land vehicle with engine. The station basically consists of a frame, preferably provided with ground support wheels for easy movement thereof, a user control interface adapted to impart controls to the charging station 1, at least one tank 3 for containing the coolant fluid, a suction/introduction unit 4, which can be connected on one end to said tank 3 and on the other end, to a pair of relative high pressure conduits 5 that allow high pressure connection HP, in which the liquid high pressure coolant circulates, and a low pressure connection LP, in which the coolant is in a gaseous state and at low pressure.

The above suction/introduction unit 4 is also associated to a suction unit 6 which, for example through a compressor element, draws/extracts (in other words, circulates in the associated circuit) the coolant in the closed circuit which is normally established with the air conditioning system 2.

The present invention instead implements an efficient connection of said suction/introduction unit 4 to an auxiliary containment means, hereinafter indicated with reference numeral 11, so as to fully implement the extraction method of a "contaminated" gas from the conditioning system 2 of the vehicle.

The cooling steps can be conveniently managed by the data control and processing unit/card configured to manage not only the normal charging/recovery steps but also the sequence of operations required by the present method and connection system, in order to implement the present invention.

Again with reference to the figures, reference numeral 10 globally indicates the extraction/recovery system of unsuitable or contaminated gases from the air conditioning system 2.

System 10 comprises the containment means 11, sealed and thermally insulated and configured to receive the "contaminated" gas from the air conditioning system 2.

In that regard, the containment means 11 has at least two couplings 12, 13 for the quick connection with relevant couplings on the air conditioning system 2, i.e. those normally used for connecting the charging station 1.

Within said containment means 11 there are one or more heat exchangers 11A in turn connected to two branches 14, 15 of an open circuit that can be connected at ends 16 and 17 thereof to the already mentioned high pressure HP, and low pressure LP ports of the recovery/charging machine 1.

In this way, once branches 14, 15 have been coupled to ports HP and LP, a closed circuit is established with the introduction/recovery unit 4 described above.

It follows that the coolant fluid contained in tank 3 is now connected to the circuit of system 10.

Activating the compressor of the charging unit 1 will recirculate the coolant fluid inside system 10, entering through port HP, then in the exchanger 11A, to then flowing out through port LP.

In particular, the method involves using this coolant fluid for cooling the containment means 11. This takes place since at least one lamination valve 18 is provided on the branch connectable to the high pressure end HP of station 1, configured to lower the pressure of the coolant circulating therethrough and to cause the evaporation thereof.

As will be better specified hereinafter in the description of the operation of the present extraction process, it is noted that a bypass branch 19 is also provided, which excludes valve 18 when the same is closed, keeping circulating the coolant of station 1.

The containment means 11 is preferably a 6 liter capacity tank, thermally insulated.

System 10 further comprises a probe 20 for detecting the temperature of means 11, associated with it, and which can be connected to a control unit preferably installed on the charging station in order to monitor, also through its interface, the progress during the extraction, cooling and heating steps.

The term extraction device claims the set of components described above that participate in the implementation of the system and that are not part of the existing charging unit 1. In detail, the extraction device consists of the tank or containment means 11, having ports for the connection with the system, and of the open circuit configured for coupling with the existing unit 1, implemented so as to connect externally to unit 1 and internally to means 11 to establish the heat exchange condition.

For example, in the circuit formed by branches 14 and 15 it is depicted entering into the containment body or means 11, however they may be arranged adjacent to its inner walls or to the outer walls or in other position adapted to establish in any case the direct or indirect cooling of the contaminated coolant extracted and contained in the containment means 11.

### OPERATION

The present invention provides a method for recovering the coolant gas of an air conditioning system, particularly gases deemed as "unknown" or in any case not suitable to be safely treated with known charging stations such as those indicated and described with reference numeral 1.

In particular, the method carries out the extraction in a dedicated containment means of the "contaminated" or unknown or dangerous gas contained in the air conditioning system 2.

The method involves at least the cooling of the extracted gas in order to facilitate the extraction thereof.

Generically, once system 10 has been connected to the existing charging unit 1, heat is extracted, required to cool the containment means 11 of the coolant (to be extracted or already extracted) using the coolant of the existing recovery/charging machine 1.

Of course, as said, this is possible when the recovery/charging machine 1 is connected to said containment means 11 so as to form a closed circuit for circulating the coolant by the introduction unit 4.

According to the invention, said closed circuit is of refrigerating type, due to the presence of a lamination valve 18 in system 10 object of the invention.

According to another aspect of the invention, said closed circuit of refrigerating type can be excluded through a bypass branch; in this configuration, the containment means 11 and thus the gas can be heated, thus promoting the subsequent discharge thereof.

As it is apparent from the foregoing, the closed circuit can be implemented by connecting respective ends of a heat exchanger placed within the containment means with respective high and low pressure (HP and LP) ports of said recovery/charging machine.

System 10 has no electrical connections, but only two quick connections for coupling with the air conditioning system 2 and only two connections/ports for connecting to the respective high and low pressure ports (HP, LP) of the existing unit 1.

### OPERATING STEPS

- Once both the existing unit 1 and the air conditioning system 2 have been connected to system 10, as indicated above, it is provided for starting the cooling step by commanding to the existing unit 1 to start its introduction unit 4: the coolant charge starts from station 1 to system 10 through port HP and its recovery from port LP.
- Passing through the lamination valve 18, the coolant lowers its pressure to 1 bar (14.5 psi) and begins to evaporate and cool to -30 °C (-22 °F) before being recovered on the LP end.
- The "contaminated" or unknown coolant enters from the air conditioning system 2 towards the containment means 11 through dedicated couplings to which it is connected.
- The "contaminated" or unknown coolant begins to cool and condensate on the bottom of the containment means 11.
- It is provided to monitor, for example by means of the same unit 1, the temperature of the containment means 11 until it itis steady at least at -20 °C (-4 °F) and for an extent of time in the range of 8-12 minutes.
- At this point, the recovery/extraction process is complete.
- At this point, the lamination valve can be closed and the bypass opened by the respective valve 21; the coolant of unit 1 continues to flow but this time it is used to cause the heating of means 1 to room temperature. While heating, the container pressure rises, thereby facilitating the subsequent extraction of the recovered coolant.
- By acting on the extraction valve 22, said recovered coolant is discharged by gravity, preferably introduced in a dedicated disposal container 23.

It is clear that several changes and/or additions of parts may be made to the extraction apparatus and relevant system and method described herein without departing from the scope of the present invention. It is also clear that while the present invention has been described with reference to some specific examples, a man skilled in the art can certainly implement many other equivalent embodiments of apparatus and relevant method, having the features set forth in the claims, and thus all falling within the scope of protection defined by them.

## Claims

1. Method for recovering coolant gas in an air conditioning system (2), which is of the type adapted to carry out the extraction of said gas in a suitable containment means (11) and which provides at least one cooling step for cooling the extracted gas, and for extracting the heat required to cool said containment means (11) of the coolant to be extracted or extracted using the coolant contained in an existing coolant fluid recovery/charging machine (1), when said recovery/charging machine (1) is connected to said containment means (11) so to form a closed circuit of the refrigerating type, and then for heating the containment means (11) before emptying the same, **characterized in that** said step of heating the containment means (11) is carried out by excluding the refrigerating closed circuit through the passage of the coolant in a bypass branch (19).

2. Method according to claim 1, **characterized in that** it provides for establishing said closed circuit by connecting respective ends (16, 17) of a heat exchanger (11A) placed within the containment means (11) with respective high pressure port (HP) and low pressure port (LP) of said recovery/charging machine (1).

3. Method according to any one of the preceding claims, **characterized in that** it provides for monitoring the temperature of the containment means (11) until it is steady at least at -20 °C and for an extent of time in the range of 8-12 minutes.

4. Method according to any one of the preceding claims, **characterized in that** it provides for emptying the containment means (11) of the extracted coolant by transferring said extracted coolant into a dedicated disposal container.

5. Method according to claim 4, **characterized in that** the extracted coolant is transferred into the dedicated disposal container by gravity.

6. System (10) for recovering unsuitable contaminated gases from an air conditioning system (2) according to the method of claim 1, comprising at least one containment means (11), hermetically sealed and thermally insulated, configured to receive said contaminated gas; the containment means (11) has at least two couplings (12, 13) for quick connection with corresponding couplings provided on the air conditioning system (2), one or more heat exchanger elements (11A) provided into said containment means (11) and in turn connected to a first branch (14) having a first end (16) and a second branch (15) having a second end (17) connectable respectively with a high pressure port (HP) and a low pressure port (LP) of a recovery/charging machine (1); at least one lamination valve (18) is provided between the first branch (14) and the first end (16); once the two branches (14, 15) have been coupled with the high pressure port (HP) and the low pressure port (LP) of the recovery/charging machine (1), a closed circuit with the recovery/charging machine (1) itself is formed and a coolant fluid contained in the tank (3) of said recovery/charging machine (1) can be introduced into the system (10), **characterized in that** it comprises a valve (21) and a bypass branch (19) which connects said first branch (14) to said first end (16) and which is configured to bypass the lamination valve (18) when the valve (21) is open.

7. System (10) for recovering/extracting unsuitable contaminated gases according to claim 6, **characterized in that** it comprises at least one dedicated disposal container (23) connected to the containment means (11) through an extraction valve (22) and configured to receive the extracted coolant when the lamination valve (18) is closed and the valve (21) and the extraction valve (22) are open.

## Patentansprüche

1. Verfahren zur Rückgewinnung von Kühlmittelgas in einer Klimaanlage (2), deren Art ausgelegt ist, um die Extraktion des Gases in geeigneten Aufnahmemitteln (11) durchzuführen, und das mindestens einen Kühlschritt zum Kühlen des extrahierten Gases und zum Extrahieren der Hitze bereitstellt, die zum Kühlen der Aufnahmemittel (11) des zu extrahierenden oder extrahierten Kühlmittels unter Verwendung des Kühlmittels, das in einer vorhandenen Kühlflüssigkeitsrückgewinnungs-/Lademaschine {1) enthalten ist, erforderlich ist, wenn die Rückgewinnungs-/Lademaschine (1) mit den Aufnahmemitteln (11) verbunden ist, um einen geschlossenen Kreislauf des Kältetyps zu bilden, und dann zum Erhitzen der Aufnahmemittel (11) vor deren Entleerung, **dadurch gekennzeichnet, dass** der Schritt zum Erhitzen der Aufnahmemittel (11) durchgeführt wird, indem der geschlossene Kühlkreislauf durch den Durchgang des Kühlmittels in einem Bypass-Abzweig (19) ausgeschlossen wird.

2. Verfahren nach Anspruch 1, **dadurch gekennzeichnet, dass** es die Einrichtung des geschlossenen Kreislaufs durch Verbinden der jeweiligen Enden (16, 17) eines Wärmetauschers (11A), der in den Aufnahmemitteln (11) platziert ist, mit dem jeweiligen Hochdruckanschluss (HP) und dem Niederdruckanschluss (LP) der Rückgewinnungs-/Lademaschine (1) vorsieht.

3. Verfahren nach einem der vorhergehenden Ansprüche, **dadurch gekennzeichnet, dass** es das Überwachen der Temperatur der Aufnahmemittel (11) vorsieht, bis sie mindestens bei -20 °C und für eine Zeitspanne im Bereich von 8-12 Minuten konstant ist.

4. Verfahren nach einem der vorhergehenden Ansprüche, **dadurch gekennzeichnet, dass** es das Entleeren der Aufnahmemittel (11) des extrahierten Kühlmittels durch Überführen des extrahierten Kühlmittels in einen dedizierten Entsorgungsbehälter vorsieht.

5. Verfahren nach Anspruch 4, **dadurch gekennzeichnet, dass** das extrahierte Kühlmittel durch Schwerkraft in den dedizierten Entsorgungsbehälter überführt wird.

6. System (10) zur Rückgewinnung ungeeigneter kontaminierter Gase aus einer Klimaanlage (2) nach dem Verfahren nach Anspruch 1, umfassend mindestens ein Aufnahmemittel (11), hermetisch abgedichtet und thermisch isoliert, das konfiguriert ist, um das kontaminierte Gas zu empfangen; das Aufnahmemittel (11) weist mindestens zwei Kupplungen (12, 13) zum schnellen Verbinden mit entsprechenden Kupplungen auf, die an der Klimaanlage (2) vorgesehen sind, ein oder mehrere Wärmetauscherelemente (11A), die in dem Aufnahmemittel (11) vorgesehen sind und wiederum mit einem ersten Abzweig {14) mit einem ersten Ende (16) und einem zweiten Abzweig (15) mit einem zweiten Ende (17) verbunden sind, die jeweils mit einem Hochdruckanschluss (HP) und einem Niederdruckanschluss (LP) einer Rückgewinnungs-/Lademaschine (1) verbunden werden können; mindestens ein Drosselventil (18) ist zwischen dem ersten Abzweig (14) und dem ersten Ende (16) vorgesehen; sobald die beiden Abzweige (14, 15) an den Hochdruckanschluss (HP) und den Niederdruckanschluss (LP) der Rückgewinnungs-/Lademaschine (1) gekoppelt worden sind, wird ein geschlossener Kreislauf mit der Rückgewinnungs-/Lademaschine (1) selbst gebildet und eine im Tank (3) der Rückgewinnungs-/Lademaschine (1) enthaltene Kühlmittelflüssigkeit in das System (10) eingeführt werden kann, **dadurch gekennzeichnet, dass** es ein Ventil (21) und einen Bypass-Abzweig (19) umfasst, der den ersten Abzweig (14) mit dem ersten Ende (16) verbindet und der konfiguriert ist, um das Drosselventil (18) zu umgehen, wenn das Ventil (21) geöffnet ist.

7. System (10) zum Rückgewinnen/Extrahieren ungeeigneter kontaminierter Gase nach Anspruch 6, **dadurch gekennzeichnet, dass** es mindestens einen dedizierten Entsorgungsbehälter (23) umfasst, der über ein Extraktionsventil (22) mit den Aufnahmemitteln (11) verbunden und konfiguriert ist, um das extrahierte Kühlmittel zu empfangen, wenn das Drosselventil (18) geschlossen ist und das Ventil (21) und das Extraktionsventil (22) geöffnet sind.

## Revendications

1. Procédé de récupération d'un gaz réfrigérant dans un système de climatisation (2), étant du type adapté pour effectuer l'extraction dudit gaz dans un moyen de contenance (11) approprié et qui prévoit au moins une étape de refroidissement pour refroidir le gaz extrait, et pour extraire la chaleur requise, pour refroidir ledit moyen de contenance (11), du réfrigérant à extraire ou extrait en utilisant le réfrigérant contenu dans une machine (1) de récupération/chargement de fluide de refroidissement existante, lorsque ladite machine (1) de récupération/chargement est raccordée au dit moyen de contenance (11) de sorte à former un circuit fermé de type réfrigérant, et pour ensuite chauffer le moyen de contenance (11) avant de le vider, **caractérisé en ce que** ladite étape consistant à chauffer le moyen de contenance (11) est effectuée en excluant le circuit fermé de réfrigération par l'intermédiaire du passage du réfrigérant dans une branche de contournement (19).

2. Procédé selon la revendication 1, **caractérisé en ce qu'**il prévoit l'établissement dudit circuit fermé en raccordant des extrémités respectives (16, 17) d'un échangeur de chaleur (11A) placé à l'intérieur du moyen de contenance (11) au port haute pression (HP) et au port basse pression (LP) de ladite machine (1) de récupération/chargement (1) .

3. Procédé selon l'une quelconque des revendications précédentes, **caractérisé en ce qu'**il prévoit la surveillance de la température du moyen de contenance (11) jusqu'à ce qu'elle soit constante à au moins -20 °C et pendant une période de temps comprise entre 8 et 12 minutes.

4. Procédé selon l'une quelconque des revendications précédentes, **caractérisé en ce qu'**il prévoit, pour vider le moyen de contenance (11) du réfrigérant extrait, de transférer ledit réfrigérant extrait dans un contenant d'élimination dédié.

5. Procédé selon la revendication 4, **caractérisé en ce que** le réfrigérant extrait est transféré dans le contenant d'élimination dédié par gravité.

6. Système (10) destiné à récupérer des gaz contaminés inappropriés d'un système de climatisation (2) selon le procédé de la revendication 1, comprenant au moins un moyen de contenance (11), hermétiquement étanche et isolé thermiquement, configuré pour recevoir ledit gaz contaminé ; le moyen de contenance (11) comporte au moins deux accouplements (12, 13) pour un raccordement rapide avec des accouplements correspondants prévus sur le système de climatisation (2), un ou plusieurs élément(s) (11A) d'échangeur de chaleur prévu(s) dans ledit moyen de contenance (11) et à son/leur tour raccordé(s) à une première branche (14) comportant une première extrémité (16) et à une seconde branche (15) comportant une seconde extrémité (17) pouvant être reliée, respectivement, à un port haute pression (HP) et à un port basse pression (LP) de la machine (1) de récupération/chargement ; au moins une vanne de laminage (18) est prévue entre la première branche (14) et la première extrémité (16) ; une fois que les deux branches (14, 15) ont été accouplées au port haute pression (HP) et au port basse pression (LP) de la machine (1) de récupération/chargement, un circuit fermé avec ladite machine (1) de récupération/chargement est formé et un fluide réfrigérant contenu dans le réservoir (3) de ladite machine (1) de récupération/chargement peut être introduit dans le système (10), **caractérisé en ce qu'**il comprend une vanne (21) et une branche de contournement (19) qui relie ladite première branche (14) à ladite première extrémité (16) et qui est configurée pour contourner la vanne de laminage (18) lorsque la vanne (21) est ouverte.

7. Système (10) servant à récupérer/extraire des gaz contaminés inappropriés selon la revendication 6, **caractérisé en ce qu'**il comprend au moins un contenant d'élimination (23) dédié relié au moyen de contenance (11) à travers une vanne d'extraction (22) et configuré pour recevoir le réfrigérant extrait lorsque la vanne de laminage (18) est fermée et la vanne (21) et la vanne d'extraction (22) sont ouvertes.
